# EUROPEAN PATENT APPLICATION

(11) **EP 4 723 543 A1**
(43) Date of publication of application: **08.04.2026**
(21) Application number: 24829982.8
(22) Date of filing: 19.03.2024
(51) Int. Cl.: H04L 9/08

(54) **KEY PROCESSING METHOD AND APPARATUS, AND RELATED DEVICE**

(30) Priority: 27.06.2023 CN 202310770039; 09.08.2023 CN 202311001529
(71) Applicant: Huawei Cloud Computing Technologies Co., Ltd., Guiyang, Guizhou, 550025 (CN)
(72) Inventor: WEI, Yuke, Guiyang, Guizhou 550025 (CN); DENG, Yi, Guiyang, Guizhou 550025 (CN); ZHANG, Zhenyu, Guiyang, Guizhou 550025 (CN)
(74) Representative: Pfenning, Meinig & Partner mbB
(86) International application number: PCT/CN2024/082437
(87) International publication number: WO 2025/001329

(57) **Abstract**

This application discloses a key processing method. The key processing method is applied to a management system. The management system is connected to a service system, and manages cipher devices by using key indexes. The management system obtains a first key operation instruction sent by a first service system in the service system, and sends a second key operation instruction to a first cipher device based on first key information. The second key operation instruction includes a first key index and a first operation type. The first key index is an index of a first key corresponding to the first key information. The second key operation instruction instructs the first cipher device to perform an operation of the first operation type on the first key. The management system obtains a first key operation result fed back by the first cipher device. In this way, by using the key indexes, the management system can implement cross-device and cross-cluster key management, and can meet a requirement for unified key management in a large-scale service scenario.

## Description

This application claims priorities to Chinese Patent Application No. 202310770039.0, filed with the China National Intellectual Property Administration on June 27, 2023 and entitled "KEY MANAGEMENT METHOD AND APPARATUS, AND ANOTHER DEVICE", and to Chinese Patent Application No. CN202311001529.0, filed with the China National Intellectual Property Administration on August 9, 2023 and entitled "KEY PROCESSING METHOD AND APPARATUS, AND RELATED DEVICE", both of which are incorporated herein by reference in their entireties.

### TECHNICAL FIELD

This application relates to the field of cloud computing technologies, and in particular, to a key processing method and apparatus, and a related device.

### BACKGROUND

In a current service scenario, there is a requirement for encrypting data with a high security requirement. Data encryption scenarios are, for example, service scenarios such as data storage, data transmission, identity authentication, and data integrity protection. For service scenarios that have requirements for high security and high performance encryption, cipher devices are usually used to implement key management and cipher calculation. The cipher devices are, for example, hardware devices such as a cipher card, a cipher machine, and a signature verification server.

Currently, the cipher device usually manages a key stored in a device. However, in a large-scale encryption service scenario, a large quantity of keys are related, and it is difficult to implement cross-device key management. It is difficult for a current device-dimension key management method to meet a requirement of the large-scale encryption service scenario.

### SUMMARY

Embodiments of this application provide a key processing method and apparatus, and a related device, and can be applied to a management system connected to a service system. The management system can manage cipher devices by using key indexes, to implement cross-device key management, and meet a requirement for unified key management in a large-scale encryption service scenario.

According to a first aspect, this application provides a key processing method applied to a management system. The management system is connected to a service system. The management system manages cipher devices by using key indexes. The management system obtains a first key operation instruction sent by a first service system. The first service system is one of service systems connected to the management system. The first key operation instruction includes first key information and a first operation type. The first key information is used to determine a first key that needs to be processed. The first operation type is an operation type of an operation performed on the first key. The management system generates a second key operation instruction based on the first key information. The second key operation instruction includes a first key index and the first operation type. The first key index is an index of a first key corresponding to the first key information. The first key index is a unique index of the first key. The management system sends the second key operation instruction to a first cipher device. The second key operation instruction instructs the first cipher device to perform an operation of the first operation type on the first key. The first cipher device is one of the cipher devices managed by the management system. In an example, the first cipher device can be determined by the management system based on an operation requirement of the second key operation instruction for the first key. In another example, the first key information includes an identifier of the first cipher device. The management system determines the first cipher device based on the identifier of the first cipher device included in the first key information. The management system obtains a first key operation result fed back by the first cipher device, to implement subsequent management on the first key and the first cipher device based on the first key operation result.

The management system manages the cipher devices by using the key indexes, so that cross-device and cross-cluster cipher device management can be implemented. In addition, a key index that uniquely corresponds to the key is used, so that global key awareness and management can be implemented, and a requirement for key use and management in a large-scale scenario can be met.

In some possible implementations, there are a plurality of service systems connected to the management system. In other words, a quantity relationship between the management system and the service system is one-to-one or one-to-multiple. The service system connected to the management system includes a second service system. The management system obtains a third key operation instruction sent by the second service system. The third key operation instruction includes second key information and a second operation type. The management system sends a fourth key operation instruction to a second cipher device based on the second key information. The fourth key operation instruction includes a second key index and the second operation type. The second key index is an index of a second key corresponding to the second key information. The fourth key operation instruction instructs the second cipher device to perform an operation of the second operation type on the second key. The second cipher device is one of the cipher devices managed by the management system. The second cipher device can be determined by the management system based on the second key operation instruction, or determined based on a cipher device identifier included in the first key information. The management system obtains a second key operation result fed back by the second cipher device, to implement subsequent management on the second key and the second cipher device based on the second key operation result.

In some possible implementations, after obtaining the first key operation result fed back by the first cipher device, the management system updates key management information of the key index based on the first key operation result. The key management information includes information related to a key. The key management information includes one or more of a key ID, a key algorithm name, a key type, and a key version. The management system can manage a life cycle of the key based on the key management information.

In some possible implementations, the first operation type includes one or more of a create type, a query type, an update type, and a delete type.

In some possible implementations, the first operation type is the create type. To be specific, the second key operation instruction instructs the first cipher device to create the first key corresponding to the first key index. After obtaining the first key operation result fed back by the first cipher device, the management system records the generated first key index into the key management information of the key index. In this way, the key management information is updated in time, so that the management system determines a key status based on the key management information, and the management system manages the key.

In some possible implementations, the management system controls the first cipher device to synchronize the first key. The management system sends a key synchronization instruction to the first cipher device. The key synchronization instruction includes the first key index. The key synchronization instruction instructs the first cipher device to synchronize the first key corresponding to the first key index to a third cipher device. In this way, the first key can be synchronized between the cipher devices.

In some other possible implementations, the management system can implement key backup. The management system obtains a key backup instruction that includes the first key index and that is sent by a fourth cipher device. The management system obtains the first key corresponding to the first key index from the first cipher device, and sends the first key to the fourth cipher device. A manner in which the management system obtains the first key corresponding to the first key index from the first cipher device is not limited in this application. In an example, after the first cipher device creates the first key, the management system obtains the first key from the first key operation result sent by the first cipher device. In another example, after obtaining the key backup instruction, the management system finds, through query, that the first key corresponding to the first key index is created by the first cipher device. The management system obtains the first key from the first cipher device.

Key synchronization and key backup can meet requirements of scenarios in which keys need to be migrated, such as application migration and new cipher device addition, so that a service application is decoupled from local hardware that stores a key, and a range of application scenarios is expanded. In addition, key synchronization or key backup can improve reliability of the key, and ensure that the key can be recovered. In addition, an execution process of creating a same key by another cipher device can be reduced, and complexity of key management can be simplified.

In some possible implementations, the cipher device is a physical function device. The cipher device includes a plurality of virtual function devices obtained through virtualization processing. A plurality of keys corresponding to the key indexes are associated with the plurality of virtual function devices by using a home index. In this way, a virtual function device associated with a key can be determined by using the home index, so that the virtual function device can invoke the associated key. A same key does not need to be stored in different virtual function devices, to save key storage space, improve key management efficiency, and save space costs.

In some possible implementations, the management system can further adjust a virtual function device corresponding to a key in the cipher device. The management system sends a key adjustment instruction to the first cipher device. The key adjustment instruction instructs the first cipher device to adjust distribution of the first key in virtual function devices of the first cipher device, and updates a home index associated with the first key. An association relationship between the key and the virtual function devices can be dynamically adjusted by using the home index, and a same key can be avoided from being stored in different virtual function devices, to reduce space occupied by the key and reduce costs.

According to a second aspect, this application provides a key processing apparatus. The apparatus is used in a management system, the management system is connected to a service system, the management system manages cipher devices by using key indexes, and the apparatus includes: an obtaining module, configured to obtain a first key operation instruction sent by a first service system in the service system, where the first key operation instruction includes first key information and a first operation type; and a sending module, configured to send a second key operation instruction to a first cipher device based on the first key information, where the second key operation instruction includes a first key index and the first operation type, the first key index is an index of a first key corresponding to the first key information, and the second key operation instruction instructs the first cipher device to perform an operation of the first operation type on the first key. The obtaining module is further configured to obtain a first key operation result fed back by the first cipher device.

In some possible implementations, the obtaining module is further configured to obtain a third key operation instruction sent by a second service system in the service system, where the third key operation instruction includes second key information and a second operation type. The sending module is further configured to send a fourth key operation instruction to a second cipher device based on the second key information, where the fourth key operation instruction includes a second key index and the second operation type, the second key index is an index of a second key corresponding to the second key information, and the fourth key operation instruction instructs the second cipher device to perform an operation of the second operation type on the second key. The obtaining module is further configured to obtain a second key operation result fed back by the second cipher device.

In some possible implementations, the apparatus further includes:
an update module, configured to update key management information of the key index based on the first key operation result, where the key management information includes one or more of the following: a key ID, a key algorithm name, a key type, and a key version.

In some possible implementations, the first operation type includes one or more of the following: a create type, a query type, an update type, and a delete type.

In some possible implementations, the first operation type is the create type, and the apparatus further includes:
a recording module, configured to record the generated first key index into the key management information of the key index.

In some possible implementations, the sending module is further configured to send a key synchronization instruction to the first cipher device, where the key synchronization instruction includes the first key index, and the key synchronization instruction is used to synchronize the first key corresponding to the first key index to a third cipher device.

In some possible implementations, the obtaining module is further configured to obtain a key backup instruction of a fourth cipher device, where the key backup instruction includes the first key index.

The obtaining module is further configured to obtain the first key corresponding to the first key index from the first cipher device.

The sending module is further configured to send the first key to the fourth cipher device.

In some possible implementations, the cipher device is a physical function device, the cipher device includes a plurality of virtual function devices, and a plurality of keys corresponding to the key indexes are associated with the plurality of virtual function devices by using a home index.

In some possible implementations, the sending module is further configured to send a key adjustment instruction to the first cipher device, where the key adjustment instruction instructs the first cipher device to adjust distribution of the first key in a virtual function device of the first cipher device, and update a home index associated with the first key.

According to a third aspect, this application provides a computing device cluster. The computing device cluster includes at least one computing device, and the at least one computing device includes at least one processor and at least one memory. The at least one memory is configured to store instructions, and the at least one processor executes the instructions stored in the at least one memory, to enable the computing device cluster to perform the key processing method in any one of the first aspect or the possible implementations of the first aspect. It should be noted that the memory may be integrated into the processor, or may be independent of the processor. The at least one computing device may further include a bus. The processor is connected to the memory through the bus. The memory may include a readable memory and a random access memory.

According to a fourth aspect, this application provides a computer-readable storage medium. The computer-readable storage medium stores instructions. When the instructions are run on at least one computing device, the at least one computing device is enabled to perform the method according to any one of the first aspect or the implementations of the first aspect.

According to a fifth aspect, this application provides a computer program product including instructions. When the computer program product runs on at least one computing device, the at least one computing device is enabled to perform the method according to any one of the first aspect or the implementations of the first aspect.

In this application, based on the implementations according to the foregoing aspects, the implementations may be further combined to provide more implementations.

### BRIEF DESCRIPTION OF DRAWINGS

FIG. 1 is a diagram of an example of an architecture of a cipher device and a server according to an embodiment of this application;
FIG. 2 is a diagram of a mapping relationship between a service node and a virtual cipher device according to an embodiment of this application;
FIG. 3 is a diagram of a system architecture according to an embodiment of this application;
FIG. 4 is a diagram of a structure of a system according to an embodiment of this application;
FIG. 5 is a schematic flowchart of interaction between a first service system, a management system, and a first cipher device according to an embodiment of this application;
FIG. 6 is a schematic flowchart of a key processing method according to an embodiment of this application;
FIG. 7 is a diagram of a structure of a key processing apparatus according to an embodiment of this application;
FIG. 8 is a diagram of a structure of a computing device according to an embodiment of this application;
FIG. 9 is a diagram of a structure of a computing device cluster according to an embodiment of this application; and
FIG. 10 is a diagram of a connection manner between computing devices in a computing device cluster according to an embodiment of this application.

### DESCRIPTION OF EMBODIMENTS

The following describes solutions in embodiments provided in this application with reference to the accompanying drawings in this application.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a distinguishing manner used when objects having a same attribute are described in embodiments of this application.

In service scenarios that have requirements for high security and high performance encryption, an independent hardware security module (Hardware Security Module, HSM) is usually used to implement cipher calculation and key management. The HSM is a hardware component that prevents tampering and intrusion, and is configured to improve security protection of cipher calculation and store an encryption key. The HSM can ensure security of a cipher calculation process and also provide services of using and managing a key for an authorized user. The HSM is mainly classified into two forms: a peripheral component interconnect (Peripheral Component Interconnect, PCI) card and a server cipher machine. The PCI card form is, for example, a peripheral component interconnect express (Peripheral Component Interconnect Express, PCIE) cipher card. The server cipher machine form is, for example, a cipher machine and a signature verification server. Such a device that has a specific cipher function or that can complete a specific cipher task may also be referred to as a cipher device.

Currently, the cipher device mainly manages a key in the cipher device by using a key index table. Each key has an independent index in a management range of the cipher device. The cipher device manages the key and the key index stored in the device. In this way, in a cloud scenario or a big data scenario, in such a large-scale scenario, it is difficult to perform a cross-device processing operation like key query between different cipher devices, and it is difficult to implement unified key management.

In addition, in some service scenarios, virtualization processing needs to be performed on the cipher device. One physical function (physical function, PF) cipher device is virtualized into a plurality of virtual function (virtual function, VF) cipher devices, to meet requirements for large-scale cipher use and key management. The PF cipher device may also be referred to as a physical cipher device, and the VF cipher device may be referred to as a virtual cipher device.

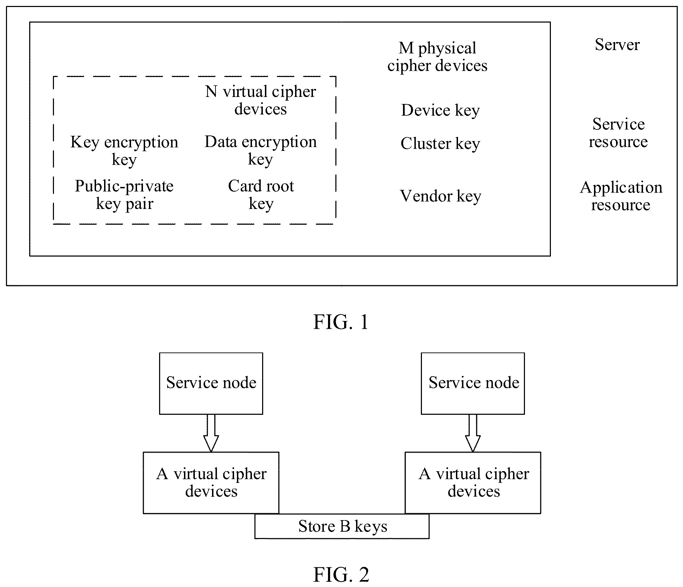

In an example, FIG. 1 is a diagram of an example of an architecture of a cipher device and a server according to an embodiment of this application. The server is configured to provide a service resource or an application resource for a user. The server is connected to M physical cipher devices. The physical cipher device is configured to manage a device key, a cluster key, and a vendor key. Each physical cipher device may be virtualized into N virtual cipher devices by using a virtualization manner, for example, a virtualization technology (Single Root I/O Virtualization, SR-IOV). The virtual cipher device is configured to manage a key encryption key (Key Encryption Key, KEK), a data encryption key (Data Encryption Key, DEK), a public-private key pair, and a card root key.

The virtual cipher device is invoked by the service resource or the application resource, to provide cipher calculation and key management services.

The virtual cipher devices are allocated to service nodes included in a needed service system. FIG. 2 is a diagram of a mapping relationship between a service node and a virtual cipher device according to an embodiment of this application. A virtual cipher devices are allocated to each service node based on a requirement. B keys are allocated to each virtual cipher device, to provide cipher calculation and key management services for the service node.

However, each virtual cipher device in each physical cipher device includes independent key and key index. When different virtual cipher devices need to use a same key, each virtual cipher device that uses the key needs to store the same key and a same key index. Consequently, the same key is repeatedly stored in the different virtual cipher devices, and storage space is wasted.

Based on this, embodiments of this application provide a key processing method. The key processing method can be applied to a management system. The management system is connected to a service system. The management system manages cipher devices by using key indexes. The management system obtains a first key operation instruction sent by a first service system in the service system. The first service system is one of service systems connected to the management system. The first key operation instruction includes first key information and a first operation type. The management system sends a second key operation instruction to a first cipher device based on the obtained first key operation instruction. The first cipher device is one of the cipher devices managed by the management system. The second key operation instruction includes a first key index and the first operation type. The first key index is an index of a first key corresponding to the key information. The second key operation instruction instructs the first cipher device to perform an operation of the first operation type on the first key. The management system obtains a first key operation result fed back by the first cipher device.

The management system manages the cipher devices by using the key indexes. The key index is a unique index generated by the management system for each key. When the unique key index is used, the management system can implement global cross-device and cross-cluster key management, key management is not limited to a range of a single device, and a requirement for unified key management in a large-scale service scenario can be met.

The following describes a system related to the key processing method provided in embodiments of this application. The system can be used in scenarios related to key management, such as cloud computing, big data, storage, and a database.

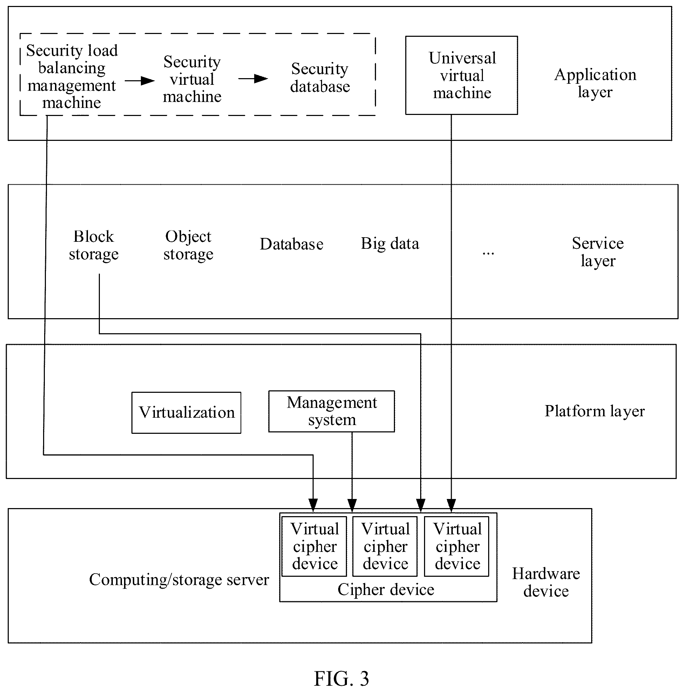

The key processing method provided in embodiments of this application can be applied to a system of a system architecture shown in FIG. 3. The system includes a hardware device, a platform layer, a service layer, and an application layer. The hardware device of the system includes a physical cipher device that supports virtualization. A plurality of virtual cipher devices are constructed, and the virtual cipher devices are mapped to information technology (Information Technology, IT) resources. At the platform layer, the management system implements capabilities of key creation and life cycle management of the virtual cipher devices, and supports capabilities such as key synchronization and management between the cipher devices. At the service layer, the virtual cipher devices are integrated into a service procedure based on a requirement, to implement capabilities such as encryption calculation and key management. At the application layer, an application can be directly connected to the cipher devices to manage keys based on a tool, and the key management capability may also be reused to implement quick key management.

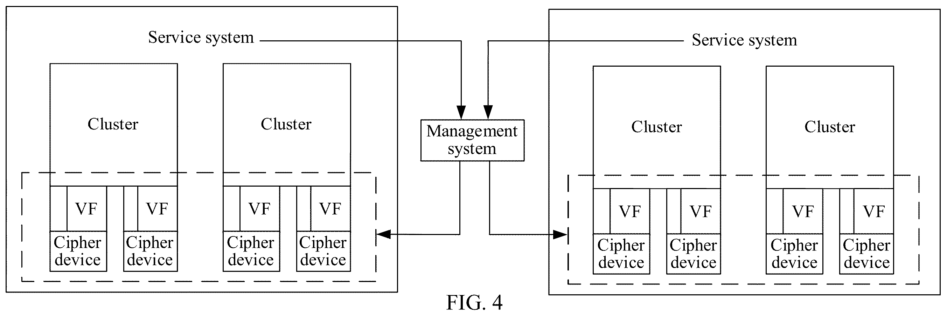

FIG. 4 is a diagram of a structure of a system according to an embodiment of this application. The system includes a plurality of service systems and a management system. The plurality of service systems are connected to the management system. The service system has a plurality of cipher devices. The cipher device is virtualized to obtain a plurality of virtual function devices. The management system is configured to manage the cipher devices of the service systems. It should be noted that the management system can manage cipher devices of one or more service systems. This is not limited in this embodiment of this application. A specific type of the cipher device is not limited in this embodiment of this application. For example, the cipher device is a device that supports virtualization, for example, a cipher card, a cipher machine, or a signature verification server.

The following describes in detail various non-limiting specific implementations of a key processing method.

The key processing method provided in embodiments of this application can be applied to the management system. For ease of understanding, the following uses the structure of the system shown in FIG. 4 as an example for description.

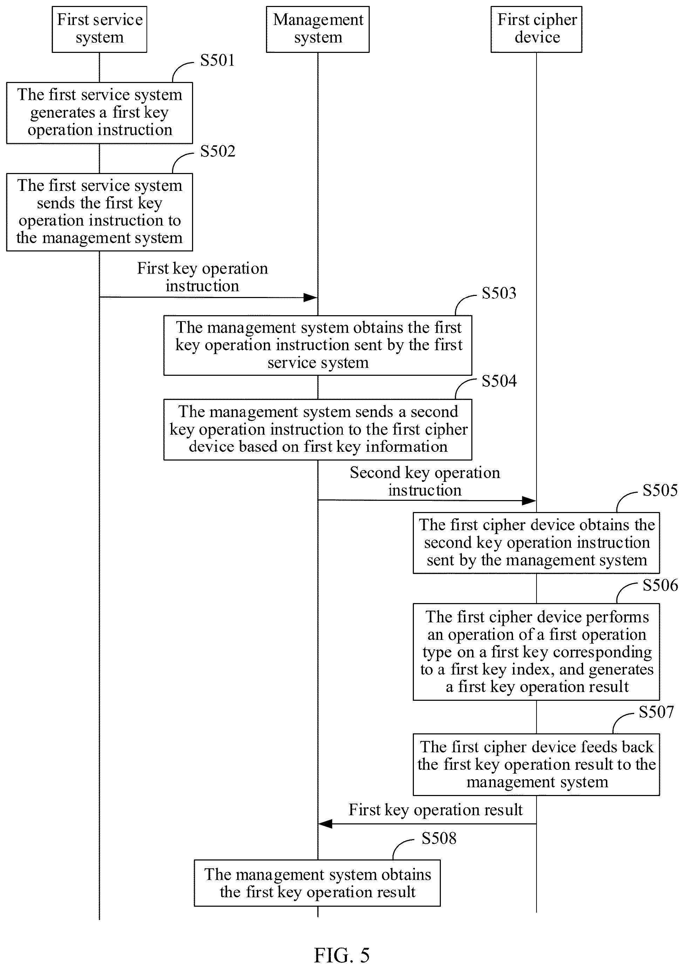

FIG. 5 is a schematic flowchart of interaction between a first service system, a management system, and a first cipher device according to an embodiment of this application. The key processing method provided in embodiments of this application includes the following steps.

Step S501: The first service system generates a first key operation instruction.

The first service system is one of service systems that establish connections to the management system. When processing a cipher-related service, the first service system needs to perform an operation on a key, to generate the first key operation instruction. The first key operation instruction includes first key information and a first operation type. The first key information corresponds to a first key on which an operation needs to be performed. The first operation type is a type of the operation that needs to be performed on the first key corresponding to the first key information. The first key operation instruction instructs to perform an operation of the first operation type by using the first key corresponding to the first key information.

The first key information and the first operation type are determined based on a service requirement. In an example, the first key information includes a key type. For example, the key type includes a key encryption key (Key Encryption Key, KEK), or a data encryption key (Data Encryption Key, DEK). In another example, the first key information includes a first key index. The first key index is a pre-created index that uniquely corresponds to the first key. The first key corresponding to the first key index can be determined based on the first key index. In still another example, the first key information includes an identifier of the first cipher device. In this way, it is convenient to determine, based on the identifier of the first cipher device, a cipher device that needs to process the first key corresponding to the first key information.

The first operation type is, for example, one or more of key-related operation types such as a create type, a query type, an update type, a delete type, and a manage type.

It should be noted that, in some scenarios, the first operation type is determined based on the first key information. For example, the first cipher device is configured to: generate a key of a DEK type, and encrypt the DEK by using the KEK. The cipher device does not store the key of the DEK type or manage the DEK. The first key information included in the first key operation instruction is a key type of the DEK and a first key index of the KEK, and the first operation type is the create type. For another example, the first cipher device is configured to generate a key of a KEK type, and can maintain and manage the key of the KEK type. For example, the first key information included in the first key operation instruction is a key type of the KEK, and the first operation type is the create type. Alternatively, for another example, the first key information included in the first key operation instruction is a first key index of the KEK, and the first operation type is one or more of operation types such as the query type, the update type, and the delete type.

In some possible implementations, in addition to the first key information and the first operation type, the first key operation instruction can further include other operation information. The operation information can be determined based on a key processing requirement.

Step S502: The first service system sends the first key operation instruction to the management system.

The management system is a system that manages cipher devices of the first service system. The first service system can establish a connection to the management system in advance. After generating the first key operation instruction, the first service system sends the first key operation instruction to the management system.

It should be noted that, in some implementations, the first key operation instruction further includes system information of the first service system. In this way, it is convenient for the management system to determine a first service system on which a key operation needs to be performed. The system information is, for example, a system identifier of the first service system, or an address of the first service system that sends the first key operation instruction.

Step S503: The management system obtains the first key operation instruction sent by the first service system.

Step S504: The management system sends a second key operation instruction to the first cipher device based on the first key information.

The management system generates the second key operation instruction based on the obtained first key operation instruction. The second key operation instruction includes the first key index and the first operation type. The first key index is the unique index of the first key corresponding to the first key information. The first key index is determined by the management system. When the unique first key index is used, unified key management and global key scheduling can be implemented, and management is not limited to a single device. The second key operation instruction instructs to perform the operation of the first operation type by using the first key corresponding to the first key index.

In a possible implementation, the first key operation instruction is used to create the key. The first operation type included in the first key operation instruction is the create type. The first key information of the first key operation instruction does not include the first key index. For example, the first key information includes only the key type. After obtaining the first key operation instruction, the management system allocates, according to an index creation rule, the first key index to the first key that needs to be created. In another possible implementation, the first key operation instruction is used to perform another operation on the created first key, for example, a query operation, an update operation, or a delete operation. The first key information included in the first key operation instruction includes the first key index. The management system generates the second key operation instruction by using the first key index and the first operation type that are included in the first key operation instruction.

Specific content of the index creation rule is not limited in this embodiment of this application. The index creation rule is used to generate the first key index that uniquely corresponds to the first key. In an example, the index creation rule is using a sequence number of key creation as the first key index. In another example, the index creation rule is selecting an index from an index resource pool as the first key index.

In addition to the first key index and the first operation type, in some implementations, the second key operation instruction further includes other information needed for performing an operation on the key, for example, information such as a key version and a key type. For example, for the second key operation instruction used to create the DEK, the first key index included in the second key operation instruction is a first key index of the KEK, the first operation type included in the second key operation instruction is the create operation, and the key type included in the second key operation instruction is the DEK.

The management system determines the first cipher device that performs an operation on the first key based on the second key operation instruction. The first cipher device is one of the cipher devices of the first service system. A manner of determining the first cipher device is not limited in this embodiment of this application. For example, the first operation type included in the second key operation instruction is the create type. In an example, the management system can select any cipher device from the cipher devices of the first service system as the first cipher device. In another example, the management system determines, based on a resource pool of the cipher devices, the first cipher device that creates the key. For another example, the first operation type included in the second key operation instruction is the update type, the query type, or the delete type. The management system determines the first cipher device based on a cipher device that stores the key corresponding to the first key index of the second key operation instruction. For another example, the first key information included in the first key operation instruction includes the identifier of the first cipher device. The management system determines the first cipher device based on the identifier of the first cipher device included in the first key information. After determining the first cipher device, the management system sends the second key operation instruction to the first cipher device.

Step S505: The first cipher device obtains the second key operation instruction sent by the management system.

Step S506: The first cipher device performs the operation of the first operation type on the first key corresponding to the first key index, and generates a first key operation result.

The first cipher device performs the operation of the first operation type based on the second key operation instruction by using the first key corresponding to the first key index. The first cipher device generates the first key operation result based on a result of the operation.

In a possible implementation, the operation of the first operation type is an operation on the first key corresponding to the first key index. For example, for the second key operation instruction used to delete the KEK, the first key index included in the second key operation instruction is the first key index of the KEK, and the first operation type is the delete operation. The first cipher device performs a second key operation to delete the KEK corresponding to the first key index. In another possible implementation, the operation of the first operation type is an operation performed by using the first key corresponding to the first key index. For example, for the second key operation instruction used to create the DEK, the first key index included in the second key operation instruction is the first key index of the KEK, the first operation type included in the second key operation instruction is the create operation, and the key type included in the second key operation instruction is the DEK. The first cipher device performs a second key operation, creates the DEK, and encrypts the DEK by using the KEK corresponding to the first key index.

Specific content of the first key operation result is not limited in this embodiment of this application. The content of the first key operation result is related to the second key operation instruction. In some examples, this embodiment of this application provides specific content of four types of first key operation results.

In a first type, the first operation type included in the second key operation instruction is the create type.

The first key operation result includes a result indicating whether creation succeeds. In an example, the second key operation instruction instructs to create the key of the KEK type. When the first key operation result includes a result indicating that the creation succeeds, the first key operation result further includes the first key index and other related information. For example, the related information is a key version. In another example, the second key operation instruction instructs to create the key of the DEK type. When the first key operation result includes a result indicating that the creation succeeds, the first key operation result further includes an encryption result.

In a second type, the first operation type included in the second key operation instruction is the query type.

The first key operation result includes the first key index and other related information.

In a third type, the first operation type included in the second key operation instruction is the update type.

The first key operation result includes a result indicating whether update succeeds, an updated key index, and other related information.

In a fourth type, the first operation type included in the second key operation instruction is the delete type.

The first key operation result includes a result indicating whether deletion succeeds.

Step S507: The first cipher device feeds back the first key operation result to the management system.

Step S508: The management system obtains the first key operation result.

The management system can determine a processing result of the second key operation instruction based on the obtained first key operation result, to implement management of the first key and the first cipher device.

In a possible implementation, after obtaining the first key operation result, the management system feeds back the first key operation result to the first service system. The first service system can implement service processing by using the obtained first key operation result.

The management system manages cipher devices of a service system, so that cross-device and cross-cluster cipher device management can be implemented. In addition, the key index that uniquely corresponds to the key is used, so that global key awareness and management can be implemented, and a requirement for key use and management in a large-scale scenario can be met.

The management system can alternatively establish connections to a plurality of service systems, and manage cipher devices of another service system. In an example, the service system includes a second service system. The second service system is a service system other than the first service system. The second service system can interact with the management system, to implement an operation on a second key.

In a possible implementation, an embodiment of this application provides a schematic flowchart of interaction between a second service system, a management system, and a second cipher device. The key processing method provided in this embodiment of this application includes steps A1 to A8.

Step A1: The second service system generates a third key operation instruction.

The second service system is one of the service systems that establish the connections to the management system. When processing a cipher-related service, the second service system needs to perform an operation on a key, to generate the third key operation instruction. The third key operation instruction includes second key information and a second operation type. The second key information corresponds to the second key on which the operation needs to be performed. The second operation type is a type of the operation that needs to be performed on the second key corresponding to the second key information.

Specific content included in the third key operation instruction is similar to that included in the second key operation instruction. For the content of the second key operation instruction, refer to the foregoing descriptions. Details are not described herein again.

Step A2: The second service system sends the third key operation instruction to the management system.

Step A3: The management system obtains the third key operation instruction sent by the second service system.

Step A4: The management system sends a fourth key operation instruction to the second cipher device based on the second key information.

The management system generates the fourth key operation instruction based on the obtained second key operation instruction. The fourth key operation instruction includes a second key index and the second operation type. The second key index is a unique index of the second key corresponding to the second key information. The second key index is determined by the management system. When the unique second key index is used, unified key management and global key scheduling can be implemented, and management is not limited to a single device. The fourth key operation instruction instructs to perform an operation of the second operation type by using the second key corresponding to the second key index.

The management system determines the second cipher device that performs an operation on the second key based on the fourth key operation instruction. The second cipher device is one of cipher devices of the second service system. A manner of determining the second cipher device is not limited in this embodiment of this application. The manner of determining the second cipher device by the management system is similar to the manner of determining the first cipher device. For the manner of determining the first cipher device, refer to the foregoing descriptions. Details are not described herein again.

Step A5: The second cipher device obtains the fourth key operation instruction sent by the management system.

Step A6: The second cipher device performs the operation of the second operation type on the second key corresponding to the second key index, and generates a second key operation result.

The second cipher device performs the operation of the second operation type based on the fourth key operation instruction by using the second key corresponding to the second key index. The second cipher device generates the second key operation result based on a result of the operation.

Step A7: The second cipher device feeds back the second key operation result to the management system.

Step A8: The management system obtains the second key operation result.

Interaction processes of the foregoing steps A1 to A8 are respectively similar to those of the foregoing steps S501 to S508. Refer to specific descriptions of the foregoing steps S501 to S508.

In addition to the foregoing steps, the management system can further manage a life cycle of the key stored in the managed cipher device. The management system records key management information of the key. The key management information includes, for example, one or more of key-related information such as a key ID, a key algorithm name, a key version, a key type, and key content.

The first key index is used as an example. After creating the first key index, the management system records the first key index into the key management information of the key index.

After generating the first key operation result based on the second key operation instruction, the first cipher device sends the first key operation result to the management system. The management system updates, based on the obtained first key operation result, the key management information including the key index. In this way, the management system can manage the key based on the key management information, to implement unified key management.

After the key is created, a synchronization or backup operation can be further performed on the key, so that a cipher device other than a cipher device that creates the key obtains the key and manages the key.

Key synchronization or backup can be implemented based on the management system. Key synchronization is that the cipher device that creates the key sends the key to another cipher device, so that the another cipher device obtains the key. Key backup is that a cipher device that needs the key obtains the key from the management system. Key synchronization or backup can meet requirements of scenarios in which keys need to be migrated, such as application migration and new cipher device addition, so that a service application is decoupled from local hardware that stores a key, and a range of application scenarios is expanded. In addition, key synchronization or key backup can improve reliability of the key, and ensure that the key can be recovered. In addition, an execution process of creating a same key by another cipher device can be reduced, and complexity of key management can be simplified.

The first cipher device and the first key are used as an example. First, a key synchronization process is specifically described. A manner of triggering the first cipher device to synchronize the key is not limited in this embodiment of this application.

In an example, after completing creation of the first key based on the second key operation instruction in which the first operation type is the create type, the first cipher device triggers synchronization of the first key to a third cipher device. In another example, after obtaining a key synchronization instruction sent by the management system, the first cipher device triggers synchronization of the first key to a third cipher device.

The third cipher device, that is, a key synchronization range, can be preset.

In an example, a synchronization rule is preconfigured. The synchronization rule includes a cipher device identifier of the third cipher device. In this way, when performing key synchronization according to the synchronization rule, the first cipher device sends related information of the first key to a cipher device corresponding to the cipher device identifier included in the synchronization rule, that is, the third cipher device. In another example, the third cipher device is all cipher devices other than the first cipher device in a cluster to which the first cipher device belongs, or all cipher devices other than the first cipher device included in the service system. After the first cipher device completes creation of the key or obtains the key synchronization instruction, the first cipher device sends related information of the key to the third cipher device.

In another example, the key synchronization range can be determined based on the key synchronization instruction. The management system can generate the key synchronization instruction based on a key synchronization requirement. The key synchronization instruction includes the first key index. The key synchronization instruction can further include the cipher device identifier of the third cipher device. The first cipher device can synchronize, based on the key synchronization instruction, the first key corresponding to the first key index to the cipher device corresponding to the cipher device identifier, that is, the third cipher device. The following uses the first cipher device and the first key as an example to describe a key backup manner.

In some scenarios, a fourth cipher device needs to obtain the key from the management system. In an example, the fourth cipher device is one of the cipher devices of the first service system. The fourth cipher device sends a key request instruction to the management system when a backup condition of the first key corresponding to the first key index is met.

The backup condition is a condition under which the fourth cipher device needs to obtain the first key corresponding to the first key index from the management system. In an example, the backup condition is that the fourth cipher device determines that the first key corresponding to the first key index is not locally stored. For example, when the service system uses the fourth cipher device to invoke the first key corresponding to the first key index, the fourth cipher device determines that the first key corresponding to the first key index is not stored locally, and the backup condition of the first key corresponding to the first key index is met. In another example, the backup condition is that the fourth cipher device is a cipher device to which the first key corresponding to the first key index is to be backed up. For example, the fourth cipher device is a cipher device newly added to the service system. The first key corresponding to the first key index managed by a faulty cipher device needs to be backed up to the fourth cipher device.

When the backup condition of the first key corresponding to the first key index is met, the fourth cipher device sends the key request instruction including the first key index to the management system. The management system obtains, based on the obtained key request instruction, the first key corresponding to the first key index, and sends the first key corresponding to the first key index to the fourth cipher device. The fourth cipher device obtains and stores the first key corresponding to the first key index, and completes backup of the first key corresponding to the first key index.

It should be noted that the foregoing key synchronization and key backup are performed by using the key as a unit. In this way, accurate key synchronization and key backup can be implemented, and a waste of resources can be avoided.

The foregoing key synchronization and key backup are both key transmission between the cipher devices. In some implementations, the cipher device is a physical function device, and virtualization processing is performed on the cipher device. The cipher device includes a plurality of virtual function devices. Key transmission also needs to be performed between different virtual function devices belonging to a same cipher device.

The cipher device creates a home index corresponding to the key. The home index indicates an association relationship between the key and the virtual function devices. In this way, a virtual function device that can use the key can be determined based on the home index, and a same key does not need to be stored in different virtual function devices, to save key storage space, improve key management efficiency, and save space costs.

In a possible implementation, the home index is a binary character string. A quantity of characters of the home index is consistent with a quantity of virtual function devices included in the cipher device. Each character of the home index indicates whether the key belongs to a virtual function device corresponding to the character. For example, the cipher device includes eight virtual function devices. The home index of the key is 10010010. Each character of the home index indicates whether the key belongs to a virtual function device corresponding to the character. A value "1" of a character indicates that the key belongs to a virtual function device corresponding to the character. A value "0" of a character indicates that the key does not belong to a virtual function device corresponding to the character. Refer to Table 1. An example in which the home index of the key is 10010010 is used. Bits of characters of the home index from a first bit to a last bit respectively correspond to virtual function devices from a virtual function device 0 to a virtual function device 7.

**Table 1**

| | | | | | | | | |
|---|---|---|---|---|---|---|---|---|
| Virtual function device | 0 | 1 | 2 | 3 | 4 | 5 | 6 | 7 |
| Home index | 1 | 0 | 0 | 1 | 0 | 0 | 1 | 0 |
| Whether belonging to | Yes | No | No | Yes | No | No | Yes | No |

The virtual function device 0, the virtual function device 3, and the virtual function device 6 can use the key. The virtual function device 1, the virtual function device 2, the virtual function device 4, the virtual function device 5, and the virtual function device 7 cannot use the key.

In addition, the home index can be correspondingly adjusted based on distribution of the key in the virtual function devices included in the cipher device. A manner of adjusting the distribution of the key in the virtual function devices included in the cipher device is not limited in this embodiment of this application.

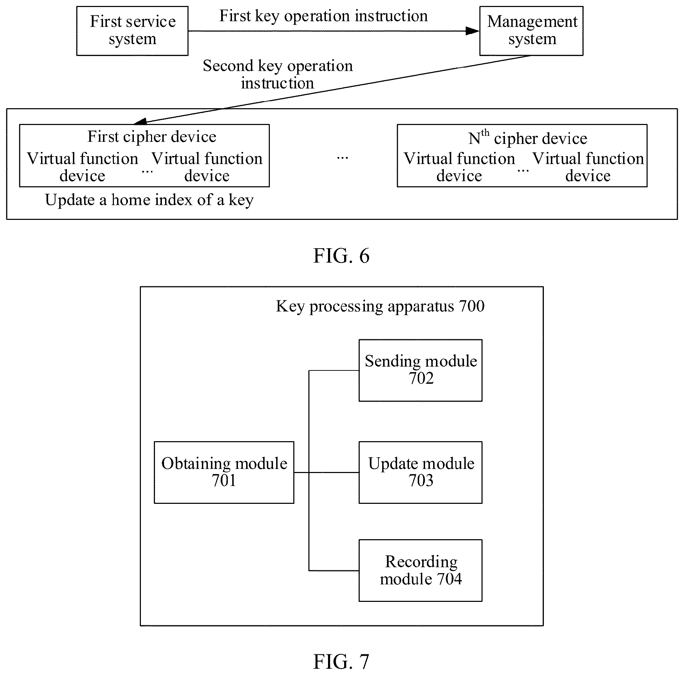

In an example, the service system can adjust, by using a key operation instruction, the distribution of the key in the virtual function devices included in the cipher device. The first service system is used as an example. FIG. 6 is a schematic flowchart of key processing according to an embodiment of this application. The first service system generates the first key operation instruction based on a key processing requirement of a processing service. The first service system sends the first key operation instruction to the management system. The management system generates the second key operation instruction based on the first key operation instruction. The management system delivers the second key operation instruction to the first cipher device. The first cipher device processes the first key according to the second key operation instruction, and updates a home index of the first key based on distribution of the first key in the virtual function devices.

In another example, the management system can generate a key adjustment instruction based on a management requirement. The key adjustment instruction instructs to adjust the distribution of the key in the virtual function devices. For example, the key adjustment instruction includes the first key index, adjustment operation information, and an identifier of a virtual function device. The adjustment operation information is synchronization. The management system sends the key adjustment instruction to the first cipher device. The first cipher device can copy, based on the key adjustment instruction, a key corresponding to the first key index to a virtual function device indicated by the identifier of the virtual function device.

The first cipher device correspondingly updates the home index of the first key based on adjusted distribution of the key in the virtual function devices included in the cipher device. An example in which the home index of the key is 10010010 is used. For example, if the key is synchronized from the virtual function device 0 to the virtual function device 1, the home index of the key is correspondingly adjusted to 11010010. For another example, if the key is deleted from the virtual function device 0, the home index of the key is correspondingly adjusted to 00010010.

The association relationship between the key and the virtual function devices can be dynamically mapped by using the home index, and the same key can be avoided from being stored in different virtual function devices, to reduce space occupied by the key and reduce costs.

Based on the key processing method provided in embodiments of this application, refer to FIG. 7. An embodiment of this application further provides a diagram of a structure of a key processing apparatus 700. The key processing apparatus 700 can implement a function of a management system. The key processing apparatus 700 is used in the management system. The management system is connected to a service system. The management system manages cipher devices by using key indexes.

FIG. 7 is a diagram of a structure of a key processing apparatus according to an embodiment of this application. The key processing apparatus 700 includes an obtaining module 701 and a sending module 702. For specific functions of the key processing apparatus 700, refer to related descriptions in the embodiment shown in FIG. 5. The obtaining module 701 is configured to implement step S503 and step S508 in the embodiment shown in FIG. 5. The sending module 702 is configured to implement step S504 in the embodiment shown in FIG. 5.

Specifically, the obtaining module 701 is configured to obtain a first key operation instruction sent by a first service system in the service system, where the first key operation instruction includes first key information and a first operation type.

The sending module 702 is configured to send a second key operation instruction to a first cipher device based on the first key information, where the second key operation instruction includes a first key index and the first operation type, the first key index is an index of a first key corresponding to the first key information, and the second key operation instruction instructs the first cipher device to perform an operation of the first operation type on the first key.

The obtaining module 701 is further configured to obtain a first key operation result fed back by the first cipher device.

In some possible implementations, the obtaining module 701 is further configured to obtain a third key operation instruction sent by a second service system in the service system, where the third key operation instruction includes second key information and a second operation type.

The sending module 702 is further configured to send a fourth key operation instruction to a second cipher device based on the second key information, where the fourth key operation instruction includes a second key index and the second operation type, the second key index is an index of a second key corresponding to the second key information, and the fourth key operation instruction instructs the second cipher device to perform an operation of the second operation type on the second key.

The obtaining module 701 is further configured to obtain a second key operation result fed back by the second cipher device.

In some possible implementations, the apparatus further includes:
an update module 703, configured to update key management information of the key index based on the first key operation result, where the key management information includes one or more of the following: a key ID, a key algorithm name, a key type, and a key version.

In some possible implementations, the first operation type includes one or more of the following:
a create type, a query type, an update type, and a delete type.

In some possible implementations, the first operation type is the create type, and the apparatus further includes:
a recording module 704, configured to record the generated first key index into the key management information of the key index.

In some possible implementations, the sending module 702 is further configured to send a key synchronization instruction to the first cipher device, where the key synchronization instruction includes the first key index, and the key synchronization instruction is used to synchronize the first key corresponding to the first key index to a third cipher device.

In some possible implementations, the obtaining module 701 is further configured to obtain a key backup instruction of a fourth cipher device, where the key backup instruction includes the first key index.

The obtaining module 701 is further configured to obtain the first key corresponding to the first key index from the first cipher device.

The sending module 702 is further configured to send the first key to the fourth cipher device.

In some possible implementations, the cipher device is a physical function device, the cipher device includes a plurality of virtual function devices, and a plurality of keys corresponding to the key indexes are associated with the plurality of virtual function devices by using a home index.

In some possible implementations, the sending module 702 is further configured to send a key adjustment instruction to the first cipher device, where the key adjustment instruction instructs the first cipher device to adjust distribution of the first key in a virtual function device of the first cipher device, and update a home index associated with the first key.

During actual application, the obtaining module 701, the sending module 702, the update module 703, and the recording module 704 may be implemented by using software or hardware. For example, the following uses the obtaining module 701 as an example to describe an implementation of the obtaining module 701. Similarly, for implementations of the sending module 702, the update module 703, and the recording module 704, refer to the implementation of the obtaining module 701.

As an example of a software functional unit, the obtaining module 701 may include code run on a computing instance. The computing instance may include at least one of a physical host (a computing device), a virtual machine, and a container. Further, there may be one or more computing instances. For example, the obtaining module 701 may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The obtaining module 701 is used as an example of a hardware functional unit, and the obtaining module 701 may include at least one computing device, for example, a server. Alternatively, the obtaining module 701 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of computing devices included in the obtaining module 701 may be distributed in a same region, or may be distributed in different regions. The plurality of computing devices included in the obtaining module 701 may be distributed in a same AZ, or may be distributed in different AZs. Similarly, the plurality of computing devices included in the obtaining module 701 may be distributed on a same VPC, or may be distributed on a plurality of VPCs. The plurality of computing devices may be any combination of computing devices such as a server, an ASIC, a PLD, a CPLD, an FPGA, and GAL.

It should be noted that in this embodiment of this application, division into the modules including the obtaining module 701, the sending module 702, the update module 703, and the recording module 704 and function descriptions are merely used as an example.

In another embodiment, the obtaining module 701 may be configured to perform any step in the key processing method, the sending module 702 may be configured to perform any step in the key processing method, the update module 703 may be configured to perform any step in the key processing method, and the recording module 704 may be configured to perform any step in the key processing method. Steps that the obtaining module 701, the sending module 702, the update module 703, and the recording module 704 are responsible for implementing may be specified based on a requirement. The obtaining module 701, the sending module 702, the update module 703, and the recording module 704 separately implement different steps in the key processing method to implement all functions of the key processing apparatus.

In the embodiment shown in FIG. 7, the obtaining module 701, the sending module 702, the update module 703, and the recording module 704 may be software configured on a computing device or a computing device cluster. In addition, by running the software on the computing device or the computing device cluster, the computing device or the computing device cluster may implement the functions of the foregoing apparatus. The following describes in detail apparatuses in a code review process from a perspective of hardware device implementation.

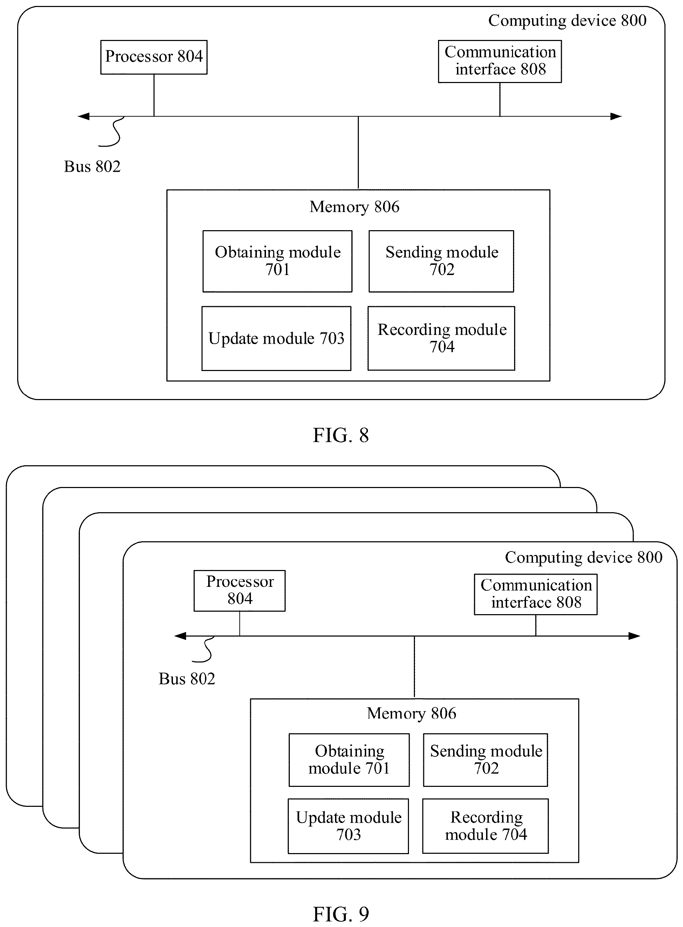

This application further provides a computing device 800. As shown in FIG. 8, the computing device 800 includes a bus 802, a processor 804, a memory 806, and a communication interface 808. The processor 804, the memory 806, and the communication interface 808 communicate with each other through the bus 802. The computing device 800 may be a server or a terminal device. It should be understood that a quantity of processors and a quantity of memories in the computing device 800 are not limited in this application.

The bus 802 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but it does not indicate that there is only one bus or only one type of bus. The bus 802 may include a path for information transmission between components (for example, the memory 806, the processor 804, and the communication interface 808) of the computing device 800.

The processor 804 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 806 may include a volatile memory (volatile memory), for example, a random access memory (random access memory, RAM). The processor 804 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 806 stores executable program code, and the processor 804 executes the executable program code to separately implement functions of the obtaining module 701, the sending module 702, the update module 703, and the recording module 704, so as to implement a key processing method. In other words, the memory 806 stores instructions used to perform the key processing method.

The communication interface 808 uses a transceiver module, for example, but not limited to, a network interface card or a transceiver, to implement communication between the computing device 800 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 9, the computing device cluster includes at least one computing device 800. Memories 806 in one or more computing devices 800 in the computing device cluster may store same instructions used to perform the key processing method.

It should be noted that the memories 806 in different computing devices 800 in the computing device cluster may store different instructions separately used to perform some functions of a key processing apparatus. In other words, the instructions stored in the memories 806 in different computing devices 800 may implement functions of one or more of the obtaining module 701, the sending module 702, the update module 703, and the recording module 704.

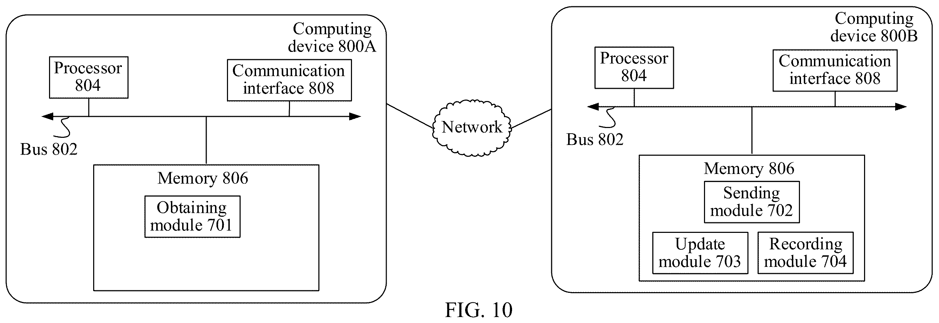

In some possible implementations, the one or more computing devices in the computing device cluster may be connected through a network. The network may be a wide area network, a local area network, or the like. FIG. 10 shows a possible implementation. As shown in FIG. 10, two computing devices 800A and 800B are connected through a network. Specifically, each computing device is connected to the network through a communication interface in the computing device. In this possible implementation, a memory 806 in the computing device 800A stores instructions for performing a function of the obtaining module 701. In addition, a memory 806 in the computing device 800B stores instructions for performing functions of the sending module 702, the update module 703, and the recording module 704.

A connection manner between computing device clusters shown in FIG. 10 may be that, in consideration of that the obtaining module 701 in the key processing method provided in this application needs to interact with a large quantity of users, it is considered that functions implemented by the sending module 702, the update module 703, and the recording module 704 are performed by the computing device 800B.

It should be understood that a function of the computing device 800A shown in FIG. 10 may alternatively be completed by a plurality of computing devices 800. Similarly, a function of the computing device 800B may alternatively be completed by a plurality of computing devices 800.

An embodiment of this application further provides a computer program product including instructions. The computer program product may be software or a program product that includes the instructions and that can run on a computing device or can be stored in any usable medium. When the computer program product runs on at least one computing device, the at least one computing device is enabled to perform a key processing method.

An embodiment of this application further provides a computer-readable storage medium. The computer-readable storage medium may be any usable medium that can be stored by a computing device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the computing device to perform a key processing method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A key processing method, wherein the method is applied to a management system, the management system is connected to a service system, the management system manages cipher devices by using key indexes, and the method comprises:
obtaining a first key operation instruction sent by a first service system in the service system, wherein the first key operation instruction comprises first key information and a first operation type;
sending a second key operation instruction to a first cipher device based on the first key information, wherein the second key operation instruction comprises a first key index and the first operation type, the first key index is an index of a first key corresponding to the first key information, and the second key operation instruction instructs the first cipher device to perform an operation of the first operation type on the first key; and
obtaining a first key operation result fed back by the first cipher device.

2. The method according to claim 1, wherein the method comprises:
obtaining a third key operation instruction sent by a second service system in the service system, wherein the third key operation instruction comprises second key information and a second operation type;
sending a fourth key operation instruction to a second cipher device based on the second key information, wherein the fourth key operation instruction comprises a second key index and the second operation type, the second key index is an index of a second key corresponding to the second key information, and the fourth key operation instruction instructs the second cipher device to perform an operation of the second operation type on the second key; and
obtaining a second key operation result fed back by the second cipher device.

3. The method according to claim 1 or 2, wherein after the obtaining the first key operation result fed back by the first cipher device, the method further comprises:
updating key management information of the key index based on the first key operation result, wherein the key management information comprises one or more of the following: a key ID, a key algorithm name, a key type, and a key version.

4. The method according to any one of claims 1 to 3, wherein the first operation type comprises one or more of the following:
a create type, a query type, an update type, and a delete type.

5. The method according to any one of claims 1 to 4, wherein the first operation type is the create type, and after the obtaining the first key operation result fed back by the first cipher device, the method further comprises:
recording the generated first key index into the key management information of the key index.

6. The method according to claim 1, wherein the method comprises:
sending a key synchronization instruction to the first cipher device, wherein the key synchronization instruction comprises the first key index, and the key synchronization instruction is used to synchronize the first key corresponding to the first key index to a third cipher device.

7. The method according to claim 1, wherein the method comprises:
obtaining a key backup instruction of a fourth cipher device, wherein the key backup instruction comprises the first key index;
obtaining the first key corresponding to the first key index from the first cipher device; and
sending the first key to the fourth cipher device.

8. The method according to any one of claims 1 to 7, wherein the cipher device is a physical function device, the cipher device comprises a plurality of virtual function devices, and a plurality of keys corresponding to the key indexes are associated with the plurality of virtual function devices by using a home index.

9. The method according to any one of claims 1 to 8, wherein the method comprises:
sending a key adjustment instruction to the first cipher device, wherein the key adjustment instruction instructs the first cipher device to adjust distribution of the first key in a virtual function device of the first cipher device, and update a home index associated with the first key.

10. A key processing apparatus, wherein the apparatus is used in a management system, the management system is connected to a service system, the management system manages cipher devices by using key indexes, and the apparatus comprises:
an obtaining module, configured to obtain a first key operation instruction sent by a first service system in the service system, wherein the first key operation instruction comprises first key information and a first operation type; and
a sending module, configured to send a second key operation instruction to a first cipher device based on the first key information, wherein the second key operation instruction comprises a first key index and the first operation type, the first key index is an index of a first key corresponding to the first key information, and the second key operation instruction instructs the first cipher device to perform an operation of the first operation type on the first key, wherein
the obtaining module is further configured to obtain a first key operation result fed back by the first cipher device.

11. The apparatus according to claim 10, wherein the obtaining module is further configured to obtain a third key operation instruction sent by a second service system in the service system, wherein the third key operation instruction comprises second key information and a second operation type;
the sending module is further configured to send a fourth key operation instruction to a second cipher device based on the second key information, wherein the fourth key operation instruction comprises a second key index and the second operation type, the second key index is an index of a second key corresponding to the second key information, and the fourth key operation instruction instructs the second cipher device to perform an operation of the second operation type on the second key; and
the obtaining module is further configured to obtain a second key operation result fed back by the second cipher device.

12. The apparatus according to claim 10 or 11, wherein the apparatus further comprises:
an update module, configured to update key management information of the key index based on the first key operation result, wherein the key management information comprises one or more of the following: a key ID, a key algorithm name, a key type, and a key version.

13. The apparatus according to any one of claims 10 to 12, wherein the first operation type comprises one or more of the following:
a create type, a query type, an update type, and a delete type.

14. The apparatus according to any one of claims 10 to 13, wherein the first operation type is the create type, and the apparatus further comprises:
a recording module, configured to record the generated first key index into the key management information of the key index.

15. The apparatus according to claim 10, wherein the sending module is further configured to send a key synchronization instruction to the first cipher device, wherein the key synchronization instruction comprises the first key index, and the key synchronization instruction is used to synchronize the first key corresponding to the first key index to a third cipher device.

16. The apparatus according to claim 10, wherein the obtaining module is further configured to obtain a key backup instruction of a fourth cipher device, wherein the key backup instruction comprises the first key index;
the obtaining module is further configured to obtain the first key corresponding to the first key index from the first cipher device; and
the sending module is further configured to send the first key to the fourth cipher device.

17. The apparatus according to any one of claims 10 to 16, wherein the cipher device is a physical function device, the cipher device comprises a plurality of virtual function devices, and a plurality of keys corresponding to the key indexes are associated with the plurality of virtual function devices by using a home index.

18. The apparatus according to any one of claims 10 to 17, wherein the sending module is further configured to send a key adjustment instruction to the first cipher device, wherein the key adjustment instruction instructs the first cipher device to adjust distribution of the first key in a virtual function device of the first cipher device, and update a home index associated with the first key.

19. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 9.

20. A computer-readable storage medium, comprising computer program instructions, wherein when the computer program instructions are executed by a computing device cluster, the computing device cluster performs the method according to any one of claims 1 to 9.

21. A computer program product comprising instructions, wherein when the instructions are run by a computing device cluster, the computing device cluster is enabled to perform the method according to any one of claims 1 to 9.
